# EUROPEAN PATENT SPECIFICATION

(11) **EP 1 206 912 B1**
(45) Date of publication and mention of the grant of the patent: **19.01.2005**
(21) Application number: 00946281.3
(22) Date of filing: 12.07.2000
(51) Int. Cl.: A23L 1/162, A21D 13/08, A23L 1/16, A23D 9/00, A23L 1/01

(54) **PROCESS FOR PRODUCING FRIED INSTANT NOODLES**
VERFAHREN ZUR HERSTELLUNG VON FRITTIERTEN SCHNELLKOCHNUDELN
PROCEDE DE FABRICATION DE NOUILLES FRITES INSTANTANEES

(30) Priority: 27.08.1999 JP 24155499
(43) Date of publication of application: 22.05.2002
(73) Proprietor: Kao Corporation, Chuo-Ku Tokyo 103 (JP)
(72) Inventor: Sakai, Hideaki, Tokyo 131-8501 (JP); Kohori, Jun, Tokyo 131-8501 (JP); Katada, Masahiro, Tokyo 131-8501 (JP)
(74) Representative: HOFFMANN - EITLE
(86) International application number: PCT/JP2000/004661
(87) International publication number: WO 2001/015550

(56) References cited:
- EP-A- 0 666 035
- EP-A- 0 836 805
- EP-A- 1 186 648
- EP-A1- 0 836 805
- EP-A2- 0 378 893
- JP-A- 4 096 992
- JP-A- 4 346 763
- JP-A- 11 221 034

## Description

This invention relates to a process for producing fried instant noodles excellent in texture and flavor, and also to fried instant noodles obtained by the process.

### Background Art

Fried instant noodles are generally produced by mixing and kneading raw materials such as flour, rolling and sheeting the thus-formed dough, forming the sheeted dough into noodle strips, steam-heating the noodles strips to gelatinize starch in the noodle strips, and then frying the steam-heated noodle strips. In this production process, the frying is an important step which is conducted to dehydrate the gelatinized noodle strips in a short time such that dried noodles having quick reconstitutability are obtained. As oil, a vegetable oil such as palm oil, sesame oil or rapeseed oil; an animal oil/fat such as lard; or a hydrogenated oil/fat thereof is used in general.

Properties required for fried instant noodles include that, when reconstituted with hot or boiling water, they have smooth surfaces to give good mouthfeel, are not prone to sogginess, do not smell oily, and have an excellent flavor inherent to flour. As processes for obtaining fried instant noodles having such properties, there are known, for example, a process comprising addition of an emulsifier and a thickener or stabilizer such as alginic acid or pectin; and a process for producing noodles, which is characterized in that upon productionof thenoodles, amicroencapsulatedoil/fat is added and mixed in a proportion of 0.5 to 20 wt.% based on the weight of flour, a solution of salt and other additives in water is added and mixed, and the thus-formed dough is laminated, rolled and slit(JP 60-110257 A).

Although these noodle-producing processes are effective to certain extent in making noodle surfaces smoother and retarding the tendency of noodles to get soggy when fried instant noodles are reconstituted with hot or boiling water, their effects are not fully sufficient. Further, these processes all require addition of a third component to raw materials for noodles and therefore, are accompanied by a problem that the flavor inherent to flour is impaired. In addition, the process of JP 60-110257 A also involves another problem that it is economically disadvantageous as the formation of microcapsules is complex. There is, hence, a long-standing desire for a production process of fried instant noodles having the above-described excellent properties.

Incidentally, diglycerides are effective in inhibiting an increase in blood triglyceride level. It is, therefore, known that they are useful as oils/fats for various deep-fried or pan-fried meals (U.S. Patent No. 4,976,984 andU.S. Patent No. 6,004,611) and are also useful as oils/fats for surface-coating steam-cooked foods composed of starch as a primary component (JP 4-34673 A). There is also known a process in which, when noodles or the like are produced, diglycerides are used by spraying or coating the same upon rolling and stretching a dough of flour (JP 4-34672 A) is also known. However, no report has been made about use of diglycerides in a production step of instant noodles.

EP 0 836 805 A1 describes a general purpose liquid oils composition which comprises oils containing 1,3-diglycerides in an amount of 40 % by weight or above and monoglycerides in an amount of less than 1.5 % by weight, with unsaturated fatty acids accounting for at least 93 % by weight of the fatty acid components constituting the diglycerides.

EP 0 666 035 A1 discloses a process for the preparation of instant fried noodles using a triglyceride as frying oil.

### Disclosure of the Invention

The present inventors have found that in a production process of fried instant noodles, use of an oil/fat composition containing at least 50 wt.% (hereinafter indicated simply by "%") as an oil/fat composition in a frying step can provide fried instant noodles which, when reconstituted with hot or boiling water, have smooth surfaces to give good mouthfeel, are not prone to sogginess, do not smell oily, and have an excellent flavor inherent to flour, leading to the completion of the present invention.

The present invention provides a process for producing fried instant noodles, characterized in that an oil/fat composition comprising at least 50% of diglycerides is used as frying oil.

The present invention also provides fried instant noodles obtained by such a process.

It is not fully clear why the use of the oil/fat composition, which comprises at least 50% of the diglycerides, in a frying step can provide fried instant noodles excellent in flavor and texture. This may, however, be gathered as will be described hereinafter. Concerning the surface smoothness of the noodles, it is considered that, as the diglycerides are compatible with water in the noodles, the water in the noodles is facilitated to evaporate in a finely divided and evenly distributed form from the noodles and that as a result, destruction hardly occurs on the structure of the noodles after frying and the reconstitution of the noodles with hot or boiling water provides the noodles with a smooth structure. With respect to the flavor, on the other hand, it is considered that the flavor inherent to flour is sealed within the noodles by a relatively uniform structure extending over the entire surfaces of the noodles, thereby assuring a good flavor. As to the retardation to the tendency of noodles to get soggy upon boiling, it is considered that by an interaction between proteins in the flour and the diglycerides, the noodles are provided with relatively high strength, thereby retarding the noodles from getting soggy.

### Brief Description of the Drawings

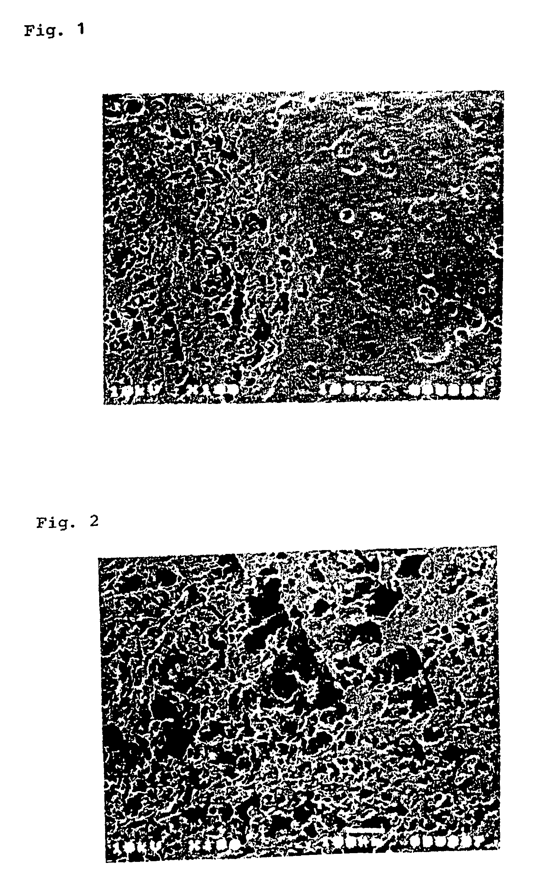

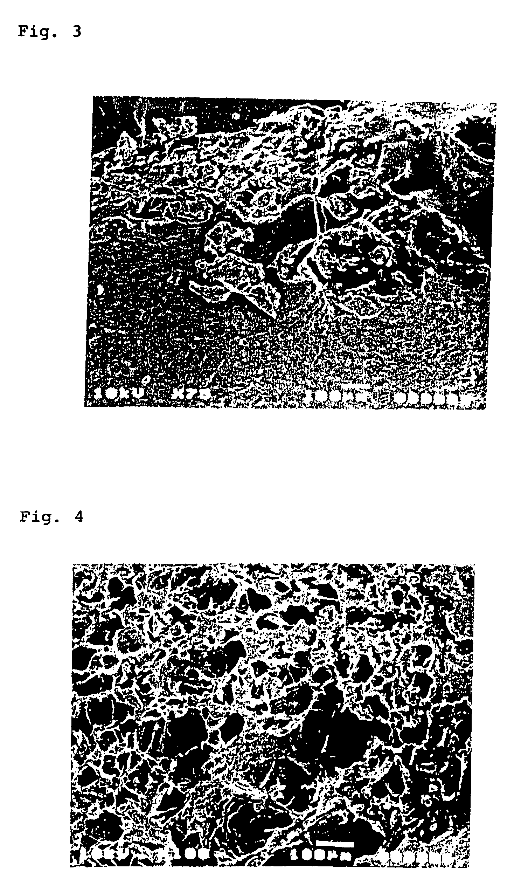

Fig. 1 is a scanning electron micrograph of a noodle surface and section when fried instant noodles according to an embodiment of the present invention were reconstituted with hot or boiling water. Fig. 2 is a scanning electron micrograph of a noodle section when the fried instant noodles according to the embodiment of the present invention were reconstituted with hot or boiling water. Fig. 3 is a scanning electron micrograph of a noodle surface when instant noodles fried using an oil/fat composition having a diglyceride content lower than 50% were reconstituted with hot or boiling water. Fig. 4 is a scanning electron micrograph of a noodle section when the instant noodles fried using the oil/fat composition having the diglyceride content lower than 50% were reconstituted with hot or boiling water.

### Best Modes for Carrying Out the Invention

The process of the present invention for producing of fried instant noodles can be practiced in a similar manner as a general production process of instant noodles except that an oil/fat composition comprising at least 50% of diglycerides is used as an oil/fat in a frying step. No particular limitation is, therefore, imposed on raw materials for the fried instant noodles insofar as they are those commonly employed depending upon the kind of the instant noodles such as flour, buck wheat flour, noodle quality improvers such as salt and *kansui* (a solution containing sodium carbonate and/or potassium carbonate and/or sodium phosphate), a thickening polysaccharide and egg powder. From the viewpoint of reducing the oily smell of fried instant noodles and improving their flavor, it is preferred to add an antioxidant as a raw material in the present invention. The antioxidant is a food-grade antioxidant, examples of which can include vitamin E, ascorbic acid and its higher fatty acid esters, catechin, rosemary, and other natural antioxidants. In the present invention, one or more of these food-grade antioxidants can be added. The content of such an antioxidant in the fried instant noodles may preferably be from 0.001 to 1%, with a range of from 0.005 to 0.3% being particularly preferred.

In the production process of the present invention, individual steps up to before frying, specifically, steps such as mixing of the above-described raw materials, lamination, rolling and sheeting, slitting into noodle strands, steam heating, cutting, and molding can be conducted by usual methods, and the thus-molded noodle strips are then fried.

The oil/fat for use in the frying step comprises at least 50%, preferably at least 60%, more preferably at least 65%, particularly preferably at least 70% of diglycerides. Use of an oil/fat composition the diglycerides content of which is at least 50% makes it possible to obtain fried instant noodles excellent in flavor and texture and not prone to sogginess. The acyl groups which constitute the diglycerides may preferably be saturated or unsaturated acyl groups each of which has 8 to 24 carbon atoms, especially 16 to 22 carbon atoms. Unsaturated acyl groups can account preferably for at least 70%, notably for 80% of the whole constituent acyl groups.

Such diglycerides can be obtained by partial esterification between glycerin and a saturated or unsaturated fatty acid, interesterification between a fatty acid ester of glycerin and glycerin, or a like reaction. The reaction can be effected either as a chemical reaction making use of an alkali catalyst or the like or as a biochemical reaction making use of a hydrolase such as lipase.

Illustrative of components other than the diglycerides in the oil/fat composition are vegetable oils such as soy oil, rapeseed oil, palm oil and corn oil, animal oils such as beef tallow and lard, oils/fats such as their hydrogenated oils, fractionated oils and ester-interchanged oils, and monoglycerides.

To avoid oxidation of the oil/fat composition for keeping the fried instant noodles smelling less oily, it is preferred to add an antioxidant in the oil/fat composition in the present invention. As the antioxidant, a higher fatty acid ester of ascorbic acid can be used. Particularly preferred examples can include ascorbic palmitate, vitamin E, catechin, and rosemary. The content of such an antioxidant in the oil/far composition may be from 0.001 to 1%, with a range of from 0.005 to 0.3% being particularly preferred, although it depends upon the kind of the fried instant noodles.

The frying temperature may range, for example, from 120 to 160°C, with a range of from 130 to 150°C being particularly preferred. The frying time may range, for example, from 0.3 to 5 minutes, with a range of from 0.5 to 3 minutes being especially preferred. After completion of the frying, the fried noodles are subjected to cooling, packaging and the like as needed to produce the fried instant noodles.

The fried instant noodles can be readily cooked into a form edible as a meal or snack by boiling the noodles at a temperature for a time, both of which are set corresponding to the kind of the noodles, and then adding soup or the like as needed.

No particular limitation is imposed on the kind of the fried instant noodles according to the present invention, and therefore, illustrative of the fried instant noodles of the present invention are *udon* (noodles made of wheat flour), *soba* (noodles made of buckwheat flour) , *ramen* (Chinese noodles made of wheat flour), and pasta.

### Examples

### Referential Examples 1-8

In accordance with the formulations shown in Table 1, oil/fat compositions were prepared by adding vitamin E, L-ascorbic palmitate and/or a silicone to oil/fat composed primarily of diglycerides and/or triglycerides and stirring the resultant mixtures.

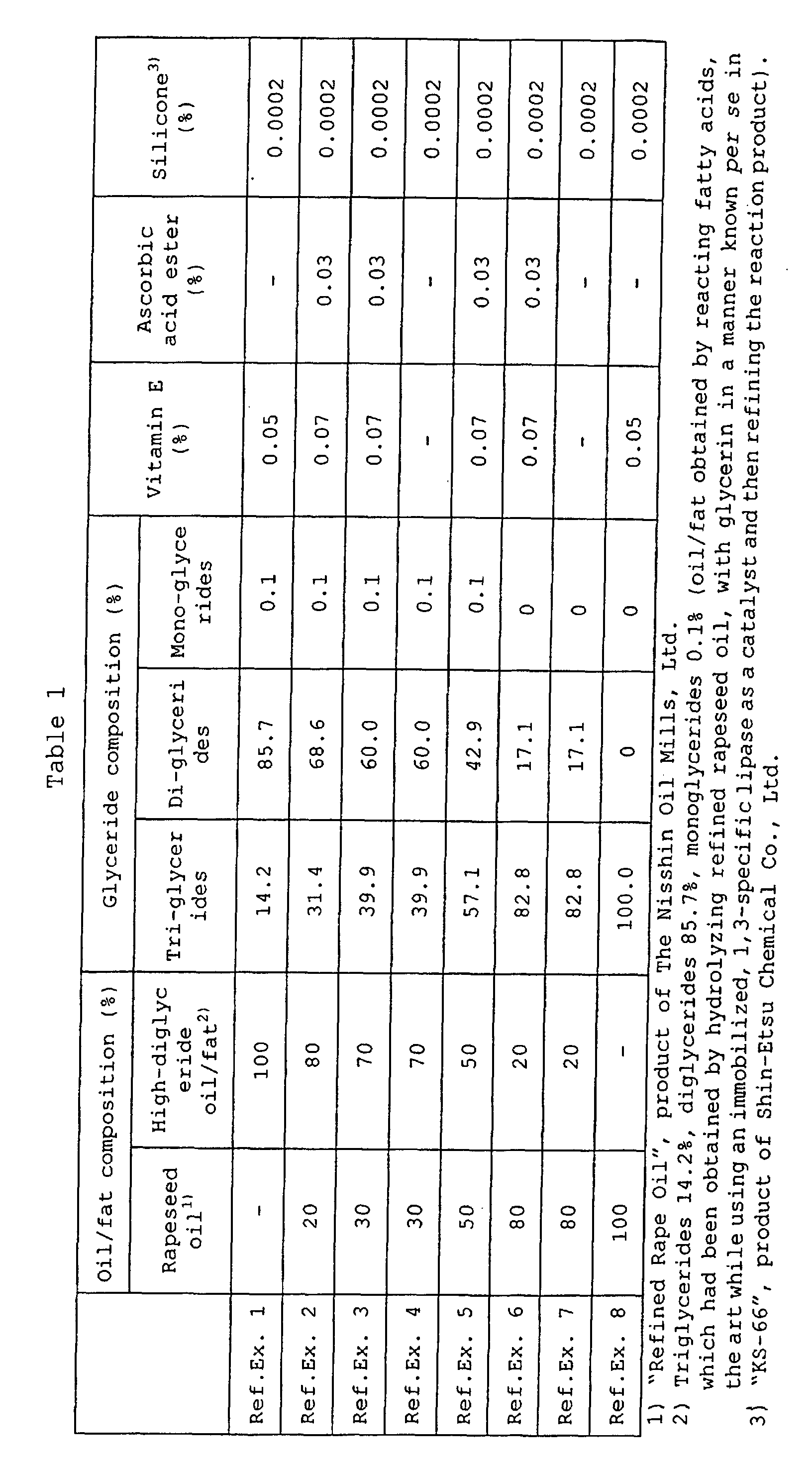

### Examples 1-4 and Comparative Examples 1-4

Separately using the individual oil/fat compositions obtained in Refereitial Examples 1-8, instant noodles (bagged noodles) were produced repeatedly 50 times by the following procedure.

Equipment and oil amount: A gas-fired fryer ("FG-400 Model", manufactured by Tsuji Kikai Inc.) was filled with 23 kg of oil. Every 10 times of instant noodle production, fresh oil was added to the initial oil level.

### Oil temperature: 150°C.

Materials: An aliquot (300 g) of *kansui*, which had been prepared by dissolving *kansui* powder (4 g) in water (1 L), was added to flour (1,000 g). They were mixed and kneaded for 10 minutes. By a noodle machine ("XIR Model", manufactured by Suzuki Noodle Machine K.K.), the thus-formed dough was repeatedly laminated and rolled, and the resulting sheet of dough was slit by a slitting blade No. 18 to obtain noodle strips of about 1.7 mm square in section. In a manner known *per se* in the art, the noodle strips were steamed for 1 minute and then allowed to cool down to afford steamed noodles.

Frying: In every production, 10 cakes of the steamed noodles (50 g per cake) were fried for 1 minute in the above-described oil to obtain instant noodles.

Conditions for reconstitution with boiling water: The thus-obtained bricks of instant noodles were each immersed in heated and boiling water (100 g), and continuously heated there for 3 minutes.

### Test 1

Using 10 panelists, the instant noodles reconstituted with boiling water as described above were ranked for flavor and texture in accordance with the following ranking standards. The results are shown in Table 2.

### (Ranking standards)

### Flavor (oily smell) of instant noodles after reconstitution with boiling water

A: Absolutely free of distastefulness from deterioration of oil/fat, and very good in oily smell.
B: Substantially free of distastefulness from deterioration of oil/fat, and good in oily smell.
C: Slightly detectable distastefulness from deterioration of oil/fat.
D: Detectable distastefulness from deterioration of oil/fat, and bad in oily smell.

### Flavor (flour flavor) of instant noodles after reconstitution with boiling water

A: Detectable flour flavor, and very good in flour flavor.
B: Fairly detectable flour flavor, and good in flour flavor.
C: Slightly detectable flour flavor.
D: Undetectable flour flavor, and bad in flour flavor.

### Texture (smoothness of noodle surfaces) of instant noodles after reconstitution with boiling water

A: Very smooth noodle surfaces, and very good in surface smoothness.
B: Smooth noodle surfaces, and good in surface smoothness.
C: Somewhat smooth noodle surfaces.
D: Rough noodle surfaces without smoothness.

### Texture (non-proneness to sogginess) of noodles after reconstitution with boiling water

A: Very slow tendency of noodles to get soggy, and very good in non-proness to sogginess.
B: Substantially slow tendency of noodles to get soggy , and good in non-proneness to sogginess.
C: Slightly slow tendency of noodles to get soggy.
D: Fast tendency of noodles to get soggy.

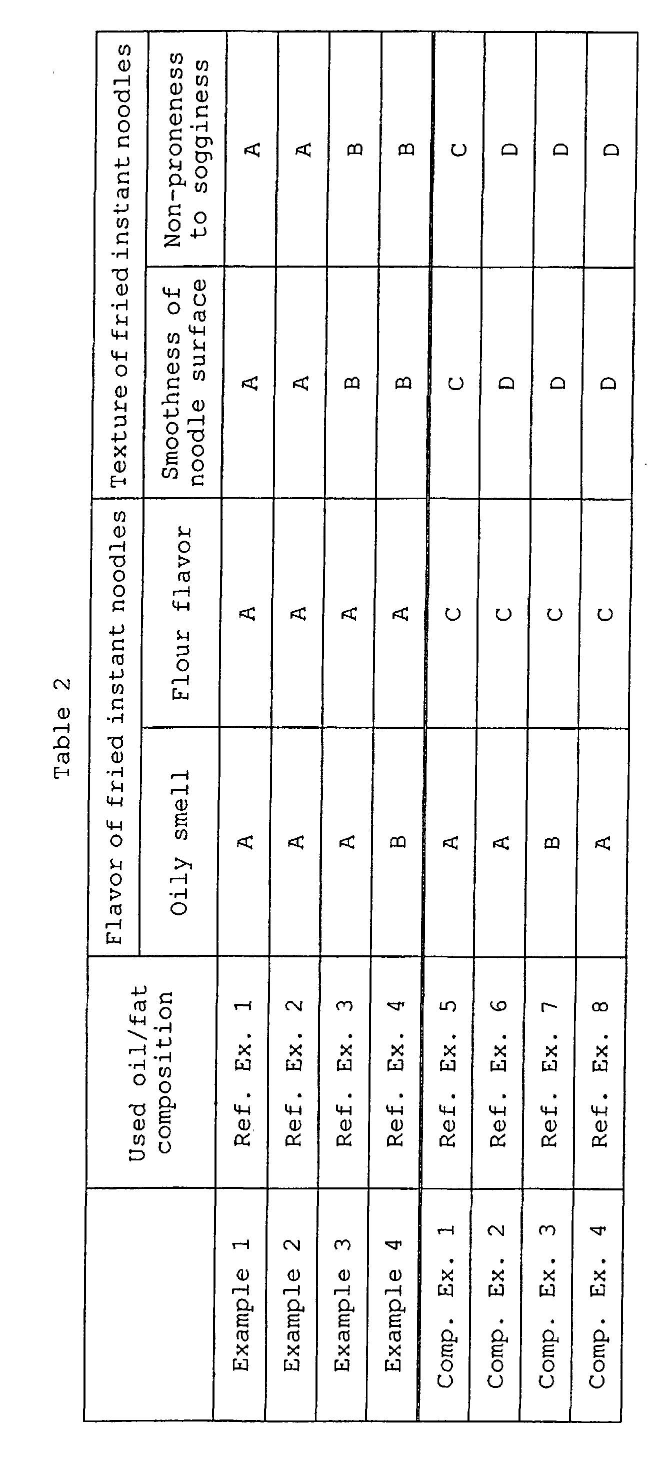

The instant noodles of Examples 1 to 4 were excellent in both flavor and texture. Especially in Examples 1 and 2 in each of which frying was conducted with the oil/fat composition of high diglyceride content, marked improvements were felt in texture. The prepared fried noodles of Comparative Examples 1 to 4, on the other hand, had no oily smell, but had practically no flour flavor, did not have smoothness, and got soggy quickly.

The surfaces and sections of the instant noodles obtained in Example 1 and Comparative Example 4 were observed under a scanning electron microscope (SEM). Their scanning electron micrographs are shown in Figs. 1 to 4. Fig 1 is a scanning electron micrograph of a surface and section of one of the instant noodles obtained in Example 1. The right half of the micrograph shows the surface, while the left half of the micrograph illustrates the section. Fig. 2 is a scanning electron micrograph of a section of one of the instant noodles .

In the instant noodles of Example 1, small cells are formed in the section, and a number of holes exist in walls of the cells. Further, no trace of large tears is observed on the noodle surfaces. This is presumed to be attributable to good compatibility between water in the steamed noodles and diglycerides and hence to smooth exchange of water with oil in the noodles during the frying. Such noodle surfaces can develop a smooth texture of good mouthfeel after reconstituted with hot or boiling water.

Fig. 3 is a scanning electron micrograph of the surface of one of the instant noodles obtained in Comparative Example 4, and Fig. 4 is a scanning electron micrograph of a section of one of the instant noodles.

The section of the instant noodle of Comparative Example 4 shows large cells, and a trace of large tears is observed in the noodle surfaces. This is considered to be attributable to low compatibility between the water contained in the steamed noodles and the triglycerides and also to non-smooth replacement of water in the noodles with the oil in the course of frying (bumping of water in the noodles). Such noodle surfaces gives rough feeling even after reconstitution with hot or boiling water, and smooth texture of such good mouthfeel as described above cannot be developed.

### Examples 5-8 and Comparative Examples 5-8

Separately using the individual oil/fat compositions obtained in Referential Examples 1-8, instant noodles (cupped noodles) were produced repeatedly 50 times by the following procedure.

Equipment and oil amount: A gas-fired fryer ("FG-400 Model", manufactured by Tsuji Kikai Inc.) was filled with 23 kg of oil. Every 10 times of instant noodle production, fresh oil was added to the initial oil level.

### Oil temperature: 150°C.

Materials: An aliquot (300 g) of *kansui*, which had been prepared by dissolving *kansui* powder (4 g) in water (1 L), was added to flour (1,000 g). They were mixed and kneaded for 10 minutes. By a noodle machine ("XIRModel", manufactured by Suzuki Noodle Machine K.K.), the thus-formed dough was repeatedly laminated and rolled, and the resulting sheet of dough was slit by a slitting blade No. 22 to obtain noodle strips of about 1.4 mm square in section. In a manner known *per se* in the art, the noodle strips were steamed for 1 minute and then allowed to cool down to afford steamed noodles.

Frying: In every production, 10 cakes of the steamed noodles (50 g per cake) were fried for 1 minute in the above-described oil to obtain instant noodles.

Conditions for reconstitution with boiling water: bricks of the instant noodles obtained in the 50^{th} production were placed in expanded polystyrene containers, respectively. Boiling water (100 g) was poured into each container, and the instant noodles were left over for 3 minutes.

### Test 2

The noodles reconstituted with boiling water as described above were ranked for flavor and texture in a similar manner as in Test 1. The results are shown in Table 3.

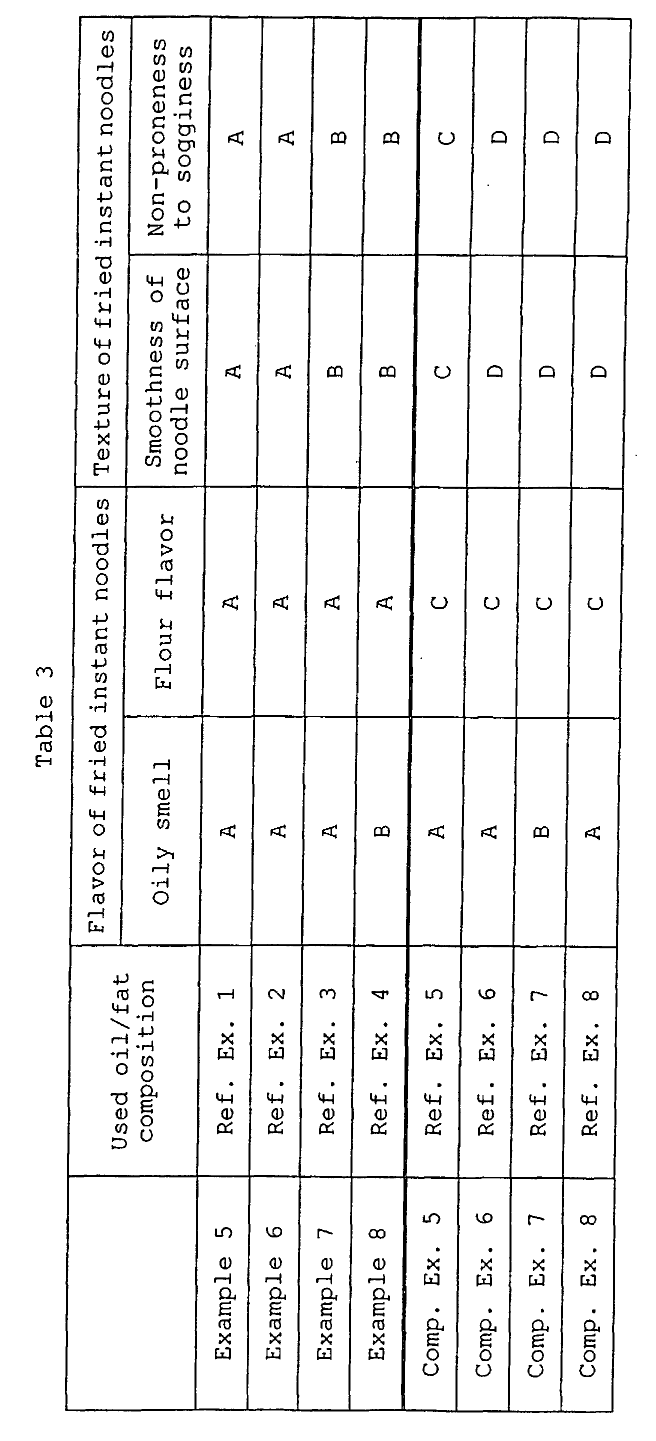

The instant noodles of Examples 5 to 8 were excellent in both flavor and texture. Especially in Examples 5 and 6 in each of which frying was conducted with the oil/fat composition of high diglyceride content, marked improvements were felt in texture. The instant noodles of Comparative Examples 5 to 8, on the other hand, had no oily smell, but had practically no flour flavor, did not have smoothness, and got soggy quickly.

### Examples 9 and 10

Separately using the oil/fat compositions of Referential Examples 1 and 4 together materials in which an antioxidant had been added beforehand, instant noodles (bagged noodles) were produced repeatedly 50 times by the following procedure.

Equipment and oil amount: A gas-fired fryer ("FG-400 Model", manufactured by Tsuji Kikai Inc.) was filled with 23 kg of oil. Every 10 times of instant noodle production, fresh oil was added to the initial oil level.

### Oil temperature: 150°C.

Materials: An aliquot (300 g) of antioxidant-dispersed *kansui*, which had been prepared by dissolving *kansui* powder (4 g) in water (1 L) and dispersing vitamin E (0.3 g) in the resultant solution, was added to flour (1,000 g). They were mixed and kneaded for 10 minutes. By a noodle machine ("XIR Model", manufactured by Suzuki Noodle Machine K.K.), the thus-formed dough was repeatedly laminated and rolled, and the resulting sheet of dough was slit by a slitting blade No. 18 to obtain noodle strips of about 1.7 mm square in section. In a manner known per se in the art, the noodle strips were steamed for 1 minute and then allowed to cool down to afford steamed noodles.

Frying: In every production, 10 cakes of the steamed noodles (50 g per cake) were fried for 1 minute in the above-described oil to obtain instant noodles.

Conditions for reconstitution with boiling water: The thus-obtained bricks of instant noodles were each immersed in heated and boiling water (100 g), and continuously heated there for 3 minutes.

### Test 3

The noodles reconstituted with boiling water as described above were ranked for flavor and texture in a similar manner as in Test 1. The results are shown in Table 4.

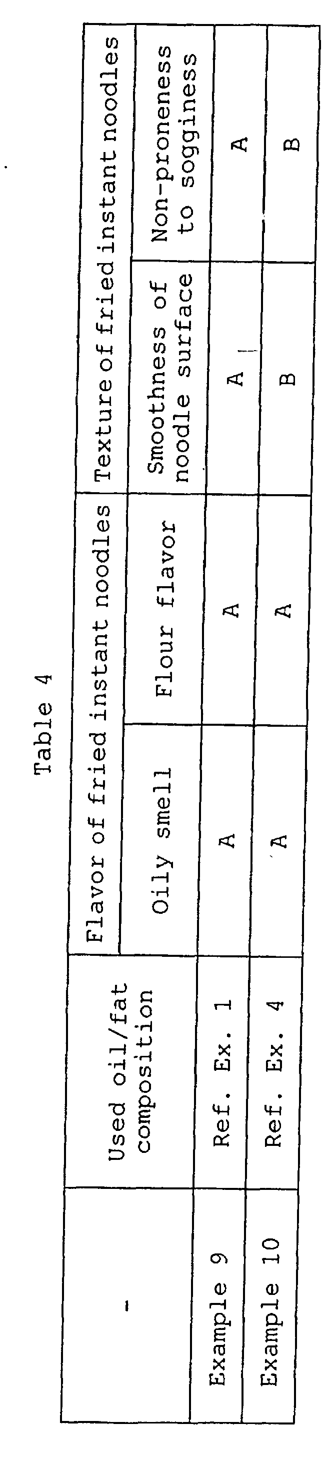

The instant noodles of Examples 9 to 10 were both excellent in flavor and texture. Of these, the instant noodles of Example 9 in which the oil/fat composition of Referential Example 1 was used was particularly good. Comparing the noodles of Example 10 with those of Example 4, the noodles of Example 10 were superior in that they did not smell oily. The use of an antioxidant as a material for noodles has, therefore, been confirmed to provide fried instant noodles with an improved flavor.

### Industrial Applicability

The production process of the present invention can provide fried instant noodles which, when reconstituted with hot or boiling water, have smooth surfaces to give good mouthfeel, are not prone to sogginess, do not smell oily, and have an excellent flavor inherent to flour.

## Claims

1. A process for producing fried instant noodles, **characterized in that** an oil/fat composition comprising at least 50 wt.% of diglycerides is used as frying oil.

2. A process according to claim 1, wherein as a raw material for noodles, an antioxidant is added in a proportion of from 0.001 to 1 wt.%.

3. Fried instant noodles obtainable by a process according to claim 1 or 2.

## Patentansprüche

1. Verfahren zur Herstellung gebratener Instantnudeln, **dadurch gekennzeichnet, dass** eine Öl/Fett-Zusammensetzung, umfassend mindestens 50 Gew.% Diglyceride, als Bratöl verwendet wird.

2. Verfahren nach Anspruch 1, wobei zu dem Rohmaterial für die Nudeln ein Antioxidans in einem Verhältnis von 0,001 zu 1 Gew.% hinzugefügt wird.

3. Gebratene Instantnudeln, erhältlich durch ein Verfahren gemäss Anspruch 1 oder 2.

## Revendications

1. Procédé pour produire des nouilles frites instantanées, **caractérisé en ce qu'**une composition huile/graisse comprenant au moins 50 % en poids de diglycérides est utilisée comme huile de friture.

2. Procédé selon la revendication 1, dans lequel, comme matière première pour des nouilles, un antioxydant est ajouté dans une proportion allant de 0,001 à 1 % en poids.

3. Nouilles frites instantanées qui peuvent être obtenues par un procédé selon la revendication 1 ou 2.
